# EUROPEAN PATENT APPLICATION

(11) **EP 2 640 133 A1**
(43) Date of publication of application: **18.09.2013**
(21) Application number: 11840558.8
(22) Date of filing: 08.11.2011
(51) Int. Cl.: H04W 48/16, H04M 1/00, H04M 1/725, H04W 88/02

(54) **MOBILE TERMINAL AND NETWORK SELECTION METHOD**

(30) Priority: 08.11.2010 JP 2010250219
(71) Applicant: NTT DOCOMO, INC., Chiyoda-ku Tokyo 100-6150 (JP)
(72) Inventor: ITO, Makoto, Tokyo 100-6150 (JP); YUNOKI, Kazufumi, Tokyo 100-6150 (JP)
(74) Representative: Maury, Richard Philip
(86) International application number: PCT/JP2011/075759
(87) International publication number: WO 2012/063836

(57) **Abstract**

A mobile terminal including: a storage unit configured to store a table of networks that a user desires to select; a selection unit configured, when a network included in the table is found from networks detected by cell search, to select the network that is detected by cell search and that is included in the table; and a processing unit configured to select a cell of the network selected by the selection unit, and performs position registration.

## Description

### TECHNICAL FIELD

The present invention relates to a mobile terminal and a network selection method.

### BACKGROUND ART

In a case where there are plural networks to which a mobile terminal can connect, a network of a connection destination is selected according to predetermined priority order normally. If the priority order is the same for networks, one network is selected at random from among networks in which a reception level is equal to or greater than a defined value. If there is no network in which the reception level is equal to or greater than the defined value, a network of a relatively high reception level is selected. The non-patent document 1 describes a conventional network selection scheme.

### [Prior art document]

[Non-patent document 1] 3GPP TS23.122 v6.5.0(2005-06)

### SUMMARY OF THE INVENTION

### PROBLEM TO BE SOLVED BY THE INVENTION

As communication services are diversified, various operators provide various services based on various fee schedules. A user may wish to select an operator of low charges such as a flat rate service in domestic and foreign areas. Or, a user may wish to select an operator providing high quality services of low charges. However, in a case of the conventional network selection method, it is not possible to select a network by properly reflecting such a user's intention.

An object of the present invention is to make it possible to select a network by properly reflecting a user's intention.

### MEANS FOR SOLVING THE PROBLEM

A mobile terminal according to an embodiment of the present invention is a mobile terminal including:
a storage unit configured to store a table of networks that a user desires to select;
a selection unit configured, when a network included in the table is found from networks detected by cell search, to select the network that is detected by cell search and that is included in the table; and
a processing unit configured to select a cell of the network selected by the selection unit, and performs position registration.

### EFFECT OF THE PRESENT INVENTION

According to an embodiment, it becomes possible to select a network by properly reflecting a user's intention.

### BRIEF DESCRIPTION OF THE DRAWINGS

Fig. 1 is a schematic flowchart showing an operation example of a mobile terminal;
Fig. 2 is a flowchart (semi-automatic mode) showing operation in steps S12 and S13 in Fig. 1 in detail;
Fig. 3 is a flowchart (automatic mode) showing operation of steps S12 and S13 of Fig. 1 in detail; and
Fig. 4 is a functional block diagram of parts related to an embodiment.

### EMBODIMENTS FOR CARRYING OUT THE INVENTION

As mentioned above, when selecting a network by using a conventional technique, the selection is performed by an automatic mode or a manual mode. However, there is no selection method in conventional techniques like a selection method according to the present invention, in which, when performing international (foreign) roaming, for example, only an operator (flat rate operator) that provides a flat rate service is searched, and if such an operator does not exist, the mobile terminal is set to out of range.

In an embodiment described below, the mobile terminal stores a table ("flat rate operator table", that is, "priority network table" more generally) including priority networks of flat rate operators. When the mobile terminal is powered on, operators in the priority network are searched, and an operator is selected. In this point, this technique is largely different from conventional techniques, in which only one operator is designated, selection is made from UPLMN (User controlled PLMN), OPLMN (Operator controlled PLMN), and other Other PLMN stored in USIM (Universal Subscriber Identity Module).

In an embodiment, for example, the priority network table of overseas flat rate operators is changed according to USIM to be used in the mobile terminal. Depending on the USIM, use of the priority network table is forbidden. In a case where a particular operator included in the priority network table is displayed as a choice of manual selection by a user, it is also displayed that the service of the operator is flat rate. Accordingly, a user who desires a flat rate service can directly connect to a network of the desired operator. Instead of manual selection, a flat rate operator may be selected automatically. For example, only a flat rate operator is automatically selected when performing international roaming, so that communication charge can be easily restricted. In a mode for automatically selecting, after returning home from overseas, it is not necessary to re-select a domestic operator like a case of manual selection.

An embodiment is described from the viewpoint of the following aspects.

### 1. Operation example

1.1 In a case of semi-automatic mode
1.2 In a case of automatic mode

### 2. Mobile terminal

### [Embodiment 1]

### <1. Operation example>

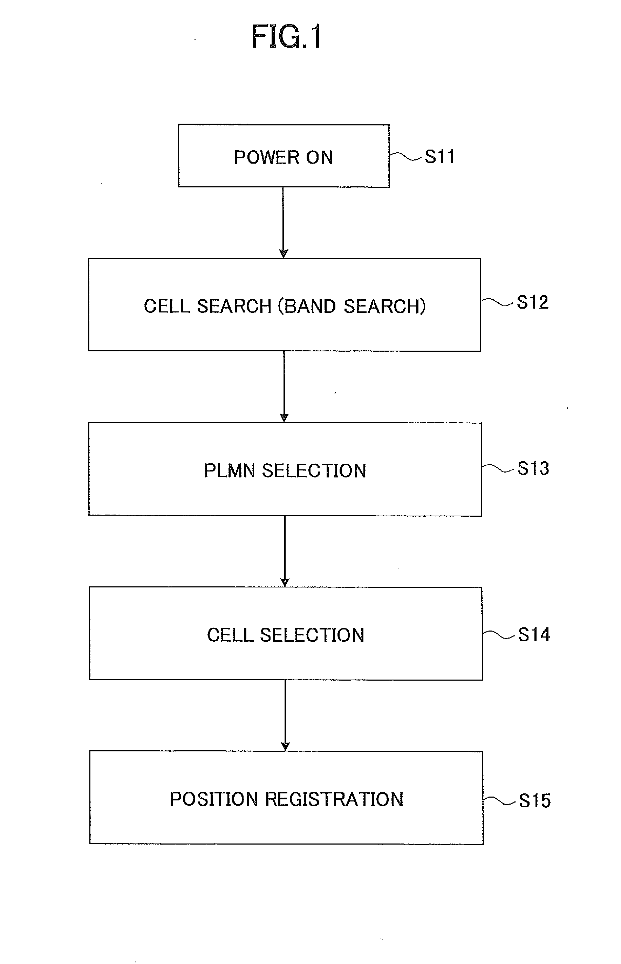

Fig. 1 shows a flowchart of an operation example of a mobile terminal. The operation example shown in the figure shows an outline after the mobile terminal is powered on until position registration completes.

In step S11, the mobile terminal is powered on. Or, the following steps may be performed when a predetermined timer expires in the mobile terminal that has gone out of the service range.

In step S12, the mobile terminal performs cell search (band search). The mobile terminal measures reception levels of a residing cell and a surrounding cell so as to detect a usable frequency and a cell of a move destination candidate. The "reception level" in the present embodiment is broadly defined as an amount representing good or bad of a radio state irrespective of an instant value or an average value. The reception level may be represented as, for example, received power, electric field strength RSSI, desired wave received power RSCP, path loss, SNR, SIR, Ec/N0 and the like.

In step S13, the mobile terminal refers to a pre-stored table so as to select a usable network (Public Land Mobile Network: PLMN) from among cells of move destination candidates selected in step S12. Although concrete selection methods are described later, the selection is performed by one of three methods of a semi-automatic mode, a manual mode and an automatic mode. The semi-automatic mode may be referred to as a half-automatic mode or a quasi-automatic mode. The automatic mode may be referred to as an automatic mode.

In step S14, the mobile terminal receives broadcast information of the selected PLMN, and detects a candidate of a usable cell from the broadcast information. That is, after the network is selected, a cell in the network is selected.

In step S15, the mobile terminal performs position registration processing based on the detected cell. More specifically, an uplink control signal including an identifier of the detected cell (cell ID) is transmitted to the base station, and a position registration area is set or updated in an exchange.

### <1.1 In a case of semi-automatic mode>

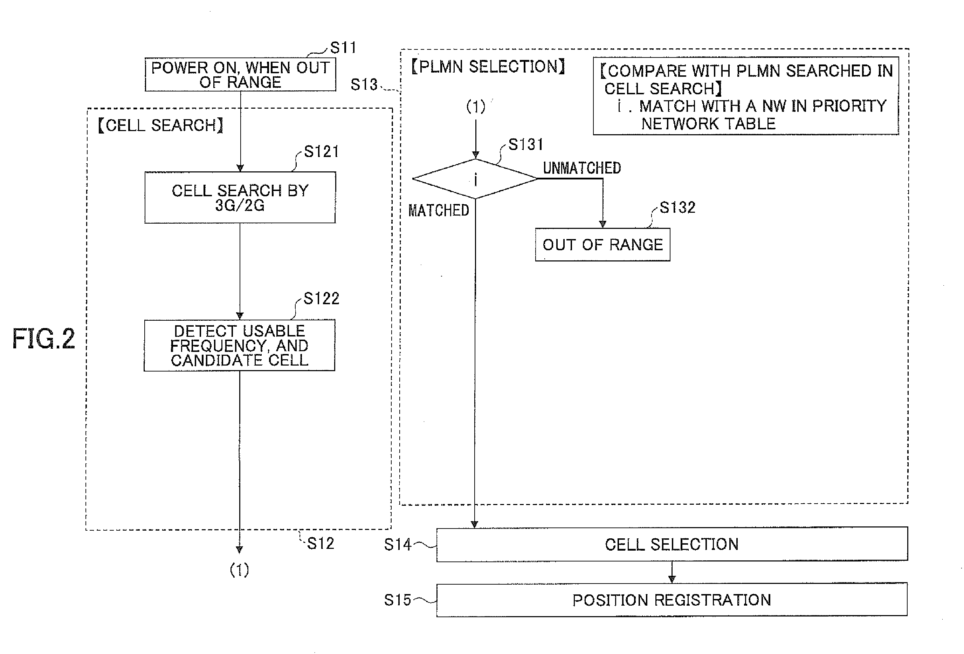

Fig. 2 is a flowchart showing operation in steps S12 and S13 of Fig. 1 in detail.

After the mobile terminal is powered on (or in a case where a predetermined cycle comes in an out-of-range area) in step S11, the mobile terminal performs cell search (band search) in step S12. For the sake of convenience of explanation, cell search is performed for a second generation mobile communication system (2G) such as GSM and a third generation mobile communication system (3G) such as IMT-2000. However, the present invention can be applied not only to 2G and 3G but also to other mobile communication systems. For example, mobile communication systems such as LTE (Long Term Evolution), LTE-Advanced, IMT-Advanced, WiFi, and WiMAX may be targets of the cell search. In step S121, the mobile terminal measures reception levels of a residing cell and a surrounding cell, and detects usable frequencies and cells of move destination candidates in step S122.

In step S13, the mobile terminal selects a usable network (PLMN) from among cells of the move destination candidates selected in step S122 by referring to a pre-stored table. In this case, the mobile terminal compares each network of the cells detected in step S122 with a priority network table that is held beforehand. The priority network table is a table of networks to which the user wishes to connect. As an example, the priority network table includes one or more networks of operators providing flat rate services.

In a case where there are networks of detected cells in the priority network table, any one of the networks is selected. In general, the selection is performed by one of the three methods of a semi-automatic mode, a manual mode and an automatic mode. Fig. 2 shows the case of the semi-automatic mode.

In the case of the semi-automatic mode, a network is selected manually by a user in the priority network table. For example, it is assumed that the priority network table includes five networks of NW1, NW2, NW3, NW4 and NW5, and that four networks of NW1, NW2, NW7 and NW8 are detected as a result of cell search. In the case of the semi-automatic mode, the user can select one of NW1 and NW2 manually. Since two networks of NW7 and NW8 are not included in the priority network table, they are not included in choices. On the other hand, in a case of the manual mode, the user can arbitrarily select a network of a detected cell. In the case of the above example, the user can manually select any of NW1, NW2, NW7 and NW8. The case of the automatic mode is described later. In the semi-automatic mode and the manual mode, when the user selects a network from the priority network table, priority order of selection may be designated for networks in the priority network table. For example, in a case where five networks of NW1, NW2, NW3, NW4 and NW5 are included in the priority network table, NW1 may be assigned the highest priority, NW2 and NW3 may be assigned the second highest priority, and NW4 and NW5 may be assigned the lowest priority. In this case, if NW1 and NW2 are the choices, NW1 is selected preferentially. How the priority is set is designated by the user.

In step 131, it is determined whether there is a network of a detected cell in the priority network table. In a case where such a network exists, the flow goes to step S14. After that, the cell of the network is selected, and position registration is performed (steps S14 and S15).

In step S131, when no network of detected cell exists in the priority network table, the flow goes to step S132. In this case, the user resides outside the service area, and information indicating "out of range" is displayed on the display of the mobile terminal. The "out of range" in step S132 means that any network in the priority network table cannot be found, and it does not necessarily mean that communication itself is impossible. That is, in step S132, although any network corresponding to the priority network table does not exist, a network that enables the mobile terminal to perform communication may exist.

The priority network table used in step S131 is stored in an storage unit in the mobile terminal beforehand. The priority network table may be stored in an information medium such as a SIM and a USIM, or may be stored in a storage unit other than the SIM and the USIM. In any case, it is only necessary that the mobile terminal can use the priority network table when selecting PLMN. The priority network table may be kept unchanged or may be changed or updated as necessary. For example, the priority network table may be changed according to USIM used for the mobile terminal. Or, the user may edit the priority network table. Further, the priority network table may be downloaded by some sort of application.

### <1.2 In a case of automatic mode>

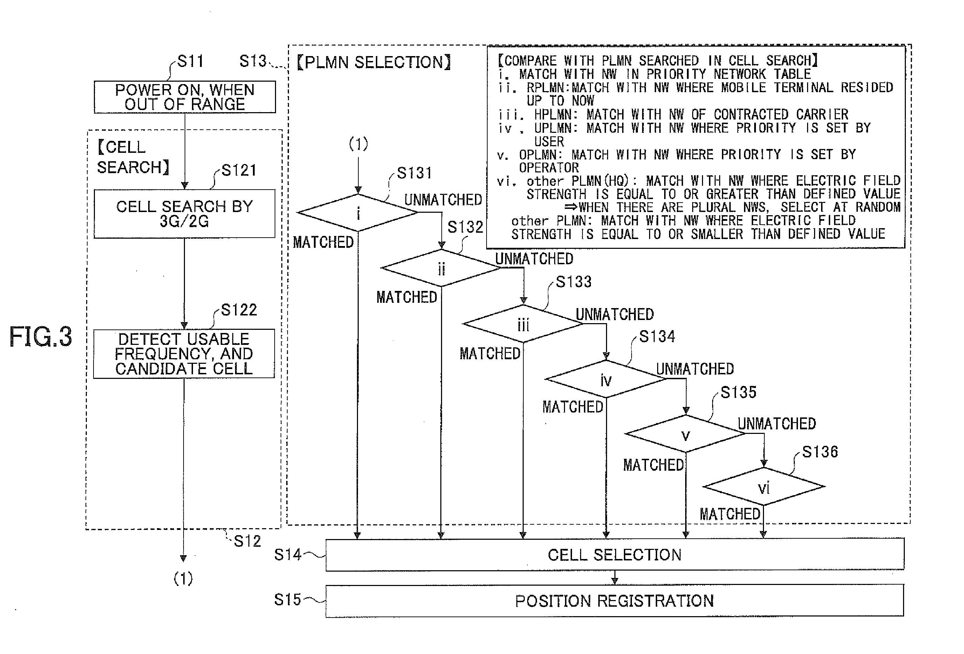

Fig. 3 is also a flowchart, like Fig. 2, showing operation of S12 and S13 of Fig. 1 in detail. Fig. 3 shows operation in the case of the automatic mode.

In step S11, after the mobile terminal is powered on (or in a case where a predetermined cycle comes in an out-of-range area), the mobile terminal performs cell search (band search) in step S12. In step S121, the mobile terminal measures reception level of the residing cell and the surrounding cell, and, in step 122, the mobile terminal detects usable frequencies and cells of move destination candidates.

In step S13, the mobile terminal selects a usable network (PLMN). In the case of the automatic mode, first, in step S131, the mobile terminal compares a network of a cell detected in step S122 with the pre-stored priority network table. When there is the network of the detected cell in the priority network table, the flow goes to step S14, so that the cell of the network is selected and position registration is performed (steps S14 and S15). When there are plural selectable networks in the priority network table, the user can select any of the networks.

The explanation so far is the same as the operation example of the flowchart shown in Fig. 2.

In step S131, when there is no network of detected cell in the priority network, the flow goes to step S132.

In step S132, the mobile terminal determines whether a network of a detected cell is the same as the most recent network in which the mobile terminal resided. When the network of the detected cell is the same as the most recent network in which the mobile terminal resided, the flow goes to step S14, and the cell of the network is selected, and position registration is performed (steps S14, S15). There is a case where the most recent network in which the mobile terminal resided is included in the priority network table. In this case, the result of step S132 is not-match.

In step S132, when no network of detected cell is the same as the most recent network in which the mobile terminal resided, the flow goes to step S133.

In step S133, the mobile terminal determines whether a network of a detected cell is the same as HPLMN (Home PLMN). HPLMN is a home network, which is a network of a carrier with which the user of the mobile terminal contracts. When the network of the detected cell is the same as the HPLMN, the flow goes to step S14, so that the cell of the network is selected and position registration is performed (step S14, S15). There is a case where HPLMN is included in the priority network table. In this case, the result of step S133 is not-match.

In step S133, when no network of detected cell is the same as HPLMN, the flow goes to step S134.

In step S134, the mobile terminal determines whether a network of a detected cell is the same as UPLMN (User controlled PLMN). UPLMN is a network of a carrier that the user has selectively registered. When the network of the detected cell is the same as UPLMN, the flow goes to step S14, so that the cell of the network is selected and position registration is performed (step S14, S15). There is a case where UPLMN is included in the priority network table. In this case, the result of step S134 is not-match.

In step S134, when no network of detected cell is the same as UPLMN, the flow goes to step S135.

In step S135, the mobile terminal determines whether a network of a detected cell is the same as OPLMN (Operator controlled PLMN). OPLMN is a network of a carrier that the carrier has selectively registered. When the network of the detected cell is the same as OPLMN, the flow goes to step S14, so that the cell of the network is selected and position registration is performed (step S14, S15). There is a case where OPLMN is included in the priority network table. In this case, the result of step S135 is not-match.

In step S135, when no network of detected cell is the same as OPLMN, the flow goes to step S136.

In step S136, the mobile terminal compares a reception level of each of one or more networks of the detected cells with a threshold. The mobile terminal selects a network (Other PLMN) that causes a reception level equal to or greater than the threshold. When there are plural networks that cause the reception level equal to or greater than the threshold, a network of a relatively good reception level is selected. On the other hand, when there is no network that causes a reception level equal to or greater than the threshold in the detected networks, a network of a relatively good reception level is selected. As the threshold, any proper value may be used. As an example, a threshold in a case of 3G system is -95dBm, and a threshold in a case of 2G system is -85dBm. In either case, at least a network of a relatively good reception level is selected, the flow goes to step S14, the cell of the network is selected, and position registration is performed (step S14, S15).

In either of the automatic mode and the semi-automatic mode, it is determined, fist, that a network in the priority network table is the same as a detected network. In this point, they are common. However, in the case of the automatic mode, different from the semi-automatic mode, a network is selected by comparing the detected network with the past-resided network, HPLMN, UPLMN, OPLMN and other PLMN in that order to determine sameness.

### <2. Mobile terminal>

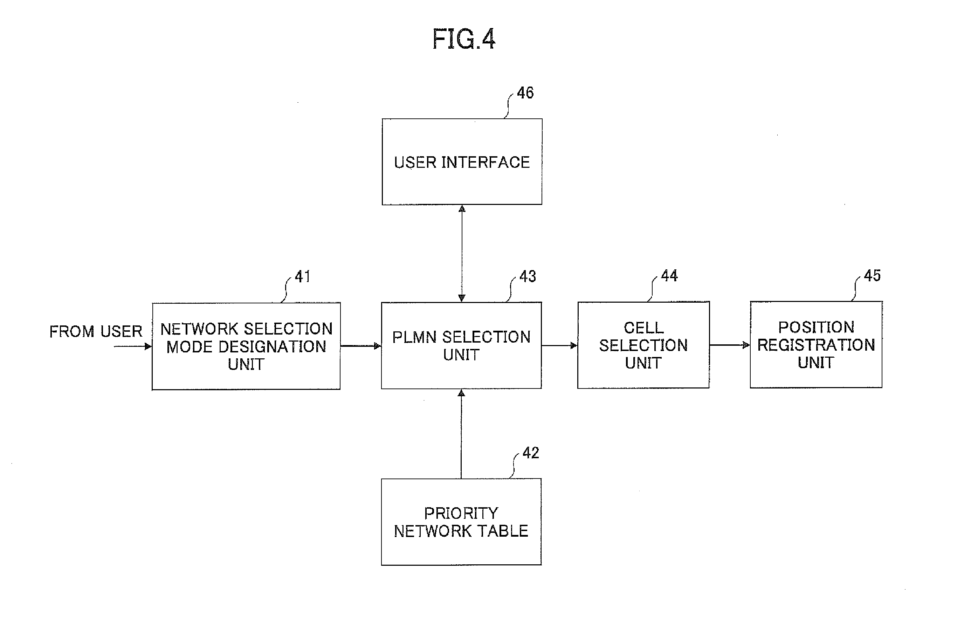

Fig. 4 is a functional block diagram of elements especially related to the present embodiment in various functional elements included in the mobile terminal. Fig. 4 shows a network mode designation unit 41, a priority network table 42, a PLMN selection unit 43, a cell selection unit 44, a position registration unit 45 and a user interface 46. The mobile terminal may be any proper apparatus that enables a user to perform communication via a network. More specifically, the mobile terminal is a mobile phone, an information terminal, a smart phone, a personal digital assistant, a mobile personal computer, or other user apparatus. But, the user apparatus is not limited to these apparatuses.

The network mode designation unit 41 reports, to the PLMN selection unit 43, a mode for selecting a network. More specifically, the mode is the semi-automatic mode, the manual mode or the automatic mode, which are already described. The mode may be directly designated by the user, or the mode may be preset as a default mode in the mobile terminal.

The priority network table 42 is a table of networks to which the user wishes to connect. As an example, the priority network table includes one or more networks of operators providing flat rate services. As mentioned above, the priority network table may be kept unchanged or may be changed or updated as necessary. For example, the priority network table may be different according to USIM used in the mobile terminal.

The PLMN selection unit 43 selects a PLMN by using the priority network table 42 according to the mode designated from the network mode designation unit 41. Concrete selection methods are described with reference to Figs. 2 and 3.

The cell selection unit 44 receives a report indicating a PLMN selected by the PLMN selection unit 43, and selects a cell of the reported PLMN.

The position registration unit 45 performs processing of position registration in the selected cell. For example, the mobile terminal transmits, to the base station, an uplink control signal for requesting position registration with a cell identifier of the selected cell from a transmission unit not shown in the figure. Accordingly, an exchange and the like connected to the base station performs processing of position registration.

The user interface 46 is an input-output unit for exchanging information with the user visually and/or acoustically. Concrete examples of the user interface are a display, a control panel including a keypad, a cathode-ray tube, a liquid crystal display, a keyboard, a touch pad, a mouse, a track ball, a microphone, a speaker, or combination of arbitrary ones of these. But, the user interface 46 is not limited to these. Especially, in the semi-automatic mode and the manual mode, when the user selects a network from the priority network table, some sort of information may be displayed together with selectable networks. For example, information indicating whether the selectable networks can provide a flat rate service may be displayed with choices of the networks for selection.

In the above, the present invention has been explained while referring to the specific embodiments. However, these are merely exemplary. Those skilled in the art will conceive of various modified examples, corrected examples, alternative examples, substituted examples, and the like.

For example, the present invention may be applied to any suitable mobile communication system for performing communication by selecting one of plural networks. For example, the present invention may be applied to systems of W-CDMA scheme, W-CDMA systems of the HSDPA/HSUPA scheme, systems of the LTE scheme, systems of the LTE-Advanced scheme, systems of the IMT-Advanced scheme, WiMAX, Wi-Fi scheme systems and the like.

While specific numerical value examples are used to facilitate understanding of the present invention, such numerical values are merely examples, and any appropriate value may be used unless specified otherwise. Classification into each embodiment or item in the description is not essential in the present invention, and features described in two or more items may be combined and used as necessary. Subject matter described in an item may be applied to subject matter described in another item (provided that they do not contradict).

For convenience of explanation, the apparatus according to the embodiment of the present invention has been explained by using a functional block diagram. However, the apparatus may be implemented in hardware, software, or a combination thereof. The software may be stored in any proper storage medium such as a RAM (Random Access Memory), a flash memory, a ROM (Read Only Memory), an EPROM(Erasable Programmable ROM), an EEPROM(Electronically Erasable and Programmable ROM), a register, a hard disk (HDD), a removable disk, a CD-ROM, database, server and the like.

Therefore, the present invention is not limited to the above-mentioned embodiment and is intended to include various variations, modifications, alterations, substitutions and so on without departing from the spirit of the present invention.

The present international application claims priority based on Japanese patent application No. 2010-250219, filed in the JPO on November 8, 2010, and the entire contents of the Japanese patent application No. 2010-250219 are incorporated herein by reference.

### DESCRIPTION OF REFERENCE SIGNS

41 network mode designation unit
42 priority network table
43 PLMN selection unit
44 cell selection unit
45 position registration unit
46 user interface

## Claims

1. A mobile terminal comprising:
a storage unit configured to store a table of networks that a user desires to select;
a selection unit configured, when a network included in the table is found from networks detected by cell search, to select the network that is detected by cell search and that is included in the table; and
a processing unit configured to select a cell of the network selected by the selection unit, and performs position registration.

2. The mobile terminal as claimed in claim 1, wherein, when there are plural networks that are detected by cell search and that are included in the table, the user manually selects a network.

3. The mobile terminal as claimed in claim 1, further comprising a display unit configured to display a network selectable by the user together with predetermined information for prompting selection.

4. The mobile terminal as claimed in claim 1, wherein the network included in the table can be changed.

5. The mobile terminal as claimed in claim 4, wherein the network included in the table is changed according to SIM or USIM used for the mobile terminal.

6. The mobile terminal as claimed in claim 1, wherein priority order of networks included in the table is designated by the user.

7. The mobile terminal as claimed in claim 3, wherein, when there are plural networks that are detected by cell search and that are included in the table, a network of better communication quality is selected.

8. A network selection method, comprising:
when a network included in a table, of networks that a user desires to select, is found from networks detected by cell search, selecting the network that is detected by cell search and that is included in the table; and
selecting a cell of the selected network, and performing position registration.

9. The network selection method as claimed in claim 8, wherein, when no contracted public mobile communication network is included in networks of the table, the contracted public mobile communication network is automatically included in the table.

10. The network selection method as claimed in claim 8, wherein, in a case where there are plural networks that are detected by cell search, when the user manually selects a network, predetermined information prompting selection is displayed by a display unit.

11. The network selection method as claimed in claim 8, wherein, it is checked whether the most recent residing network is included in the table, and when the network is included, the network is automatically selected preferentially.
